# FASCICULE DE BREVET EUROPEEN

(11) **EP 2 576 997 B1**
(45) Date de publication et mention de la délivrance du brevet: **20.07.2016**
(21) Numéro de dépôt: 11728335.8
(22) Date de dépôt: 31.05.2011
(51) Int. Cl.: F01D 25/16, F01D 21/04

(54) **PALIER DE ROULEMENT POUR TURBORÉACTEUR D'AÉRONEF ÉQUIPÉ DE MOYENS DE RÉTENTION AXIALE DE SA BAGUE EXTÉRIEURE**
WÄLZLAGER FÜR EIN FLUGZEUGTURBINENSTRAHLTRIEBWERK MIT MITTELN ZUM AXIALEN HALTEN DES LAGERAUSSENRINGES
ROLLING BEARING FOR AIRCRAFT TURBOJET ENGINE EQUIPPED WITH MEANS FOR AXIAL RETENTION OF THE EXTERNAL BEARING RING

(30) Priorité: 02.06.2010 FR 1054283
(43) Date de publication de la demande: 10.04.2013
(73) Titulaire: Snecma, 75015 Paris (FR)
(72) Inventeur: ANTUNES, Serge, Louis, F-77550 Moissy-Cramayel Cedex (FR); BRAULT, Michel, F-77550 Moissy-Cramayel Cedex (FR)
(74) Mandataire: Ilgart, Jean-Christophe
(86) Numéro de dépôt international: PCT/FR2011/051244
(87) Numéro de publication internationale: WO 2011/151592

(56) Documents cités:
- EP-A1- 0 042 320
- EP-A1- 1 921 273
- EP-A2- 0 852 286
- EP-A2- 1 008 726
- EP-A2- 1 191 191
- EP-A2- 1 630 357
- US-A1- 2003 039 538
- US-B1- 6 413 046

## Description

### DOMAINE TECHNIQUE

La présente invention se rapporte au domaine des turboréacteurs d'aéronef, et, plus particulièrement, aux moyens mis en oeuvre au sein de ces turboréacteurs pour faire face au balourd provoqué par une perte d'aube de soufflante. Cette problématique est abordée notamment dans les documents EP 1 653 051, EP 1 916 431, FR 2 752 024 et FR 2 888 621. Voir aussi le document US-A-2003/0039538.

### ETAT DE LA TECHNIQUE ANTERIEURE

La perte d'une ou plusieurs aubes de soufflante génère habituellement un fort balourd sur le rotor de soufflante portant les aubes, ce balourd étant susceptible de mettre en danger l'intégrité des structures du turboréacteur. Pour faire face à ce problème et protéger ces structures, il est connu de pratiquer des zones fusibles sur le chemin de reprise des efforts radiaux.

En effet, il est par exemple prévu de réaliser des liaisons mécaniques fusibles entre la bague extérieure des deux paliers de roulement les plus prêts du rotor de soufflante, et le carter du turboréacteur. Ces liaisons mécaniques sont dimensionnées afin de supporter les efforts radiaux en configuration normale de vol, et pour rompre en cas de perte d'au moins une aube de soufflante suite au balourd provoqué par cette perte. Ce système est également connu sous la dénomination de système de découplage mécanique.

Suite à ces deux ruptures, un unique palier de roulement, sur les trois prévus initialement, continue à assurer le centrage de l'arbre d'entraînement. Etant donné que cet unique centrage s'avère insuffisant pour conserver l'intégrité du turboréacteur, les moyens de raccord du palier intermédiaire sur le carter comportent une portion de retenue située radialement en regard d'une portion de retenue complémentaire, prévue sur le carter et centrée avec la portion de retenue. Avant la rupture des liaisons mécaniques fusibles, ces portion de retenue et portion de retenue complémentaire restent à distance radiale l'une de l'autre, et ne sont donc pas actives. En revanche, après la rupture des liaisons mécaniques fusibles suivant une perte d'aube de soufflante, la portion de retenue sollicitée radialement est prévue pour entrer en contact avec la portion de retenue complémentaire, puis être animée d'un mouvement relatif par rapport à celle-ci, sous l'effet combiné d'un mouvement de précession du rotor de soufflante et du contact avec la portion de retenue complémentaire. Lorsque les portion de retenue et portion de retenue complémentaire prennent respectivement la forme de deux pistes de roulement annulaires, de tailles différentes, le mouvement relatif de la portion de retenue est un roulement de celle-ci sur la portion de retenue complémentaire. Durant ce roulement, l'axe de rotation de la portion de retenue est donc en mouvement par rapport à la portion de retenue complémentaire, qui reste fixée au carter.

La conception telle que décrite ci-dessus est prévue pour assurer un découplage mécanique aussi rapide que possible. Ainsi, il est par exemple fait en sorte qu'une durée de l'ordre de la milliseconde ne soit pas excédée entre l'instant de la perte de l'aube de soufflante, et l'instant de la rupture des liaisons mécaniques fusibles.

Pendant cette durée, dénommée temps de découplage, les bagues extérieures des paliers de roulement, en particulier celle du palier le plus proche de la soufflante, sont soumises à des charges radiales très élevées. Ces charges radiales ont pour conséquences une consommation du jeu entre la bague extérieure et le logement cylindrique dans lequel elle est agencée, ce logement étant généralement défini par une frette, elle-même fixée au support de palier relié de manière fusible au carter du turboréacteur. Une fois le jeu consommé, la bague extérieure de palier est animée d'un mouvement relatif par rapport à la frette, sous l'effet combiné d'un mouvement de précession du rotor de soufflante et du contact avec cette même frette. Plus précisément, le mouvement relatif de la bague extérieure est un roulement de celle-ci sur le logement cylindrique de section circulaire défini par la frette. Durant ce roulement, l'axe de la bague extérieure est donc en mouvement par rapport à la frette, qui reste fixe par rapport au support de palier. Mais, surtout, le roulement de la bague extérieure de palier sur la frette conduit à un déplacement relatif tangentiel / circonférentiel entre ces éléments, susceptible d'endommager les moyens souples de raccordement habituellement prévus entre-ceux-ci.

Une rupture de ces moyens souples de raccordement n'est donc pas à exclure. Cependant, en cas de rupture de ces moyens, la bague extérieure de roulement doit être retenue axialement afin d'éviter l'émission de débris. De plus, sa retenue axiale permet d'assurer la poursuite de son roulement sur la frette, jusqu'à l'instant du découplage mécanique.

De l'art antérieur, il est connu d'interposer des moyens de rétention axiale de la bague extérieure entre le support de palier et l'extrémité amont de la bague. En effet, il peut être prévu une pluralité de cales montées par boulons sur une extrémité avant du support de palier, et coopérant avec une extrémité avant de la bague extérieure. Cette solution technique est critiquable en ce qu'elle provoque un encombrement et une masse globale importante, notamment en raison de la nécessité d'étendre la bague extérieure de palier vers l'avant, afin d'offrir une surface de butée aux cales portées par le support de palier. Effectivement, cette extension de bague vers l'avant se justifie par le besoin pour celle-ci de s'étendre au-delà de la frette dans laquelle elle est logée, dans le but de recevoir les cales de butée portées par le support de palier entourant la frette.

Cette extension vers l'avant de la bague extérieure de palier s'avère parfois même impossible à réaliser, en raison de problèmes d'encombrement dans cette zone du turboréacteur déjà très dense.

Il existe certes une possibilité de réduire la dimension axiale de la frette et la dimension axiale de la partie de la bague assurant son logement dans cette frette, mais cette réduction pourrait conduire à un montage trop faible mécaniquement. De plus, dans le cas préférentiel où un système d'amortissement par film annulaire d'huile est prévu entre la frette et la bague extérieure, cela reviendrait également à réduire la dimension axiale de ce film, et impliquerait donc une baisse d'efficacité de l'amortissement de la bague extérieure de palier.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet une structure pour turboréacteur d'aéronef comprenant :
- un palier de roulement comprenant une bague extérieure ;
- un support de palier entourant ladite bague extérieure ;
- une frette interposée entre la bague extérieure de palier et le support de palier ;
- des moyens de raccordement de la bague extérieure sur le support de palier, ces moyens comprenant :
- une bride de fixation montée sur le support de palier ; et
- des moyens souples de raccordement fixés d'une part à la bague extérieure de palier, et d'autre part à la bride de fixation ;
   ladite structure comprenant en outre des moyens permettant la rétention axiale de la bague extérieure de palier, en cas de rupture desdits moyens souple de raccordement,
   selon l'invention, lesdits moyens permettant la rétention axiale de la bague extérieure comprennent :
- des premiers moyens de butée solidaires de la frette et capables de retenir axialement cette frette par rapport au support de palier en cas de rupture desdits moyens souple de raccordement ; et
- des seconds moyens de butée solidaires de la frette et capables de retenir axialement la bague extérieure par rapport à cette frette, en cas de rupture desdits moyens souple de raccordement.

De plus, lesdits seconds moyens de butée prennent la forme d'une pluralité de pions espacés circonférentiellement les uns des autres et chacun logé dans un orifice de logement de pion pratiqué dans ladite frette, lesdits pions présentant une extrémité radialement interne se situant dans une gorge pratiquée sur ladite bague extérieure de palier équipée d'une pluralité de trous de passage radiaux traversants, débouchant dans le fond de ladite gorge, avec lesdits pions se situant chacun en regard radialement d'une partie pleine du fond de ladite gorge.

L'invention est donc remarquable en ce qu'elle prévoit la rétention axiale de la bague extérieure par l'intermédiaire de la frette. Cela conduit globalement à une baisse de l'encombrement et de la masse globale de la structure par rapport à la solution de l'art antérieur décrite ci-dessus, en particulier en raison d'une diminution de la longueur axiale de la bague extérieure, qui ne fragilise néanmoins pas le montage mécanique de la bague dans la frette.

En outre, comme cela sera explicité ci-après, les passages radiaux permettent un montage aisé des pions sur la frette, tandis que la partie pleine du fond de gorge permet d'interdire, en fonctionnement, l'extraction de ces pions radialement vers l'intérieur.

De préférence, lesdits premiers moyens de butée prennent la forme d'une collerette agencée axialement entre le support de palier et ladite bride de fixation. Cette collerette peut être placée avec ou sans jeu entre les deux éléments précités, assurant la limitation / interdiction de déplacement axial dans les deux sens.

Dans une telle configuration, on prévoit par ailleurs préférentiellement que ladite collerette est pourvue d'encoches espacées circonférentiellement les unes des autres, et coopérant avec des ergots solidaires dudit support de palier afin de limiter/interdire la rotation de la frette par rapport audit support de palier.

De préférence, lesdits pions se situent chacun en regard radialement de la bride de fixation. Cette configuration permet d'interdire également, en fonctionnement, l'extraction de ces pions radialement vers l'extérieur.

L'invention a également pour objet un procédé de montage d'une structure pour turboréacteur d'aéronef définie ci-dessus, comprenant les étapes suivantes :
- insertion de la bague extérieure de palier dans la frette, de manière à aligner radialement chacun des trous de passage pratiqués dans la bague avec un orifice de logement de pion pratiqué dans la frette ;
- insertion des pions dans les orifices de logement de pion, par les orifices de passage, de manière à placer l'extrémité radialement interne de chaque pion dans la gorge de ladite bague extérieure ;
- rotation de la bague extérieure de palier de manière à ce que chaque pion se situe en regard radialement de la partie pleine du fond de ladite gorge ; et
- montage de la bride de fixation sur le support de palier.

Enfin, l'invention a également pour objet un turboréacteur d'aéronef comprenant une structure telle que décrite ci-dessus.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en coupe longitudinale d'une partie d'un turboréacteur, selon un mode de réalisation préféré de la présente invention ;
- la figure 2 représente une vue similaire à celle de la figure 1, avec le turboréacteur se trouvant dans une configuration telle qu'adoptée après le découplage mécanique des paliers suivant la perte d'une aube de soufflante ;
- la figure 3 représente une vue plus détaillée en coupe d'une structure du turboréacteur montré sur les figures précédentes, cette structure comprenant en particulier le palier de roulement le plus prêt de la soufflante, et se présentant sous la forme d'un mode de réalisation préféré de l'invention ;
- la figure 4 représente une vue en coupe prise le long de la ligne IV-IV de la figure 3 ;
- la figure 5 représente une vue en coupe prise le long de la ligne V-V de la figure 3 ;
- la figure 6 représente une vue partielle en perspective de moyens souples de raccordement entre la bague extérieure du palier de roulement de la figure précédente, et la bride de fixation de cette bague sur le support de palier ;
- les figures 7a et 7b schématisent le mouvement de la bague extérieure de palier avant le découplage mécanique des paliers ; et
- les figures 8a et 8b schématisent des étapes d'un procédé de montage préféré de la structure montrée sur les figures précédentes.

### EXPOSÉ DÉTAILLÉ DE MODES DE RÉALISATION PRÉFÉRÉS

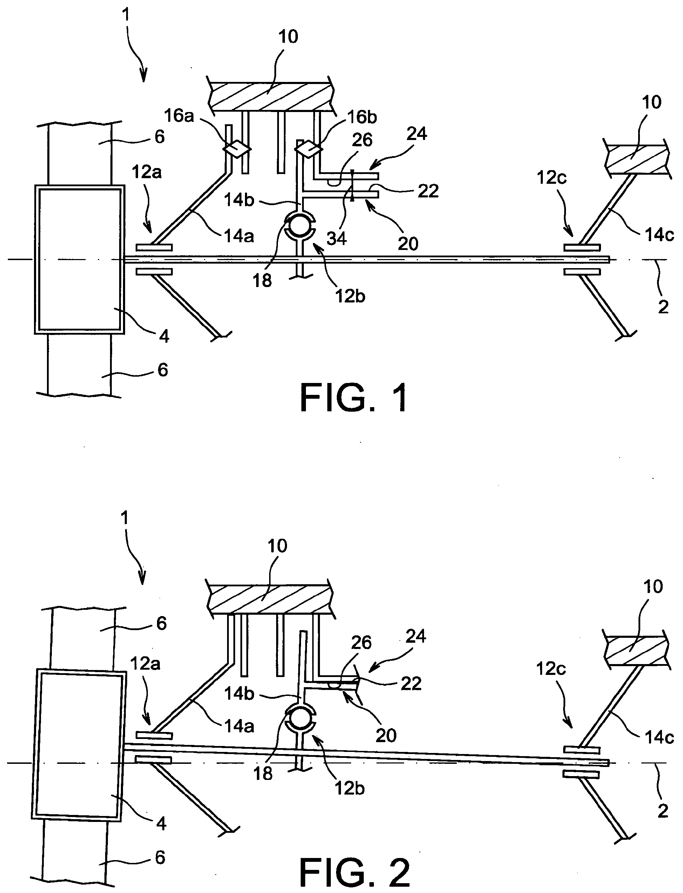

En référence à la figure 1, on peut apercevoir de manière schématique une partie d'un turboréacteur 1 pour aéronef, selon un mode de réalisation préféré de la présente invention.

De façon conventionnelle, ce turboréacteur 1 présente un axe longitudinal 2 sur lequel sont centrés un rotor de soufflante 4 portant des aubes de soufflante 6, ainsi qu'un arbre d'entraînement 8 solidaire en rotation du rotor 4, également appelé disque de soufflante.

Le turboréacteur 1 comporte également un carter 10 formant une enveloppe rigide fixe, ce carter étant représenté de manière très schématique sur la figure 1. Pour assurer le maintien et le guidage de l'arbre 8, il est prévu trois paliers de roulement espacés les uns des autres selon la direction de l'axe 2, ces paliers étant respectivement référencés, de l'avant vers l'arrière, 12a, 12b et 12c.

La bague extérieure de chacun de ces trois paliers de roulement est fixée au carter 10 par des moyens de raccord référencés respectivement 14a, 14b et 14c. Comme cela a été schématisé sur la figure 1, ces moyens de raccord prennent chacun la forme d'un support de palier formant une structure annulaire reliant la bague extérieure directement au carter, ou à une extension interne de ce dernier, tel que cela est le cas pour les deux paliers avant 12a, 12b, situés les plus prêts du rotor 4.

Le palier le plus avant 12a et le palier le plus arrière 12c sont chacun prévus pour reprendre des efforts radiaux, tandis que le palier de roulement intermédiaire 12b est également prévu pour assurer la rétention axiale de l'arbre 8.

Pour ce qui concerne les deux paliers avant 12a, 12b, leurs supports de palier 14a, 14b sont chacun relié au carter 10 par une liaison mécanique fusible 16a, 16b. Ces liaisons sont par exemple réalisées à l'aide de vis, dont le nombre, le dimensionnement et la position sont retenus de manière à pouvoir conférer le caractère fusible désiré, qui sera explicité ci-après.

Le support de palier 14b de la bague extérieure 18 du palier intermédiaire 12b, sur le carter 10, présentent de plus la particularité de comprendre une portion de retenue 20 formant une piste de roulement annulaire 22 centrée sur l'axe 2. Cette piste annulaire 22 est orientée radialement vers l'extérieur, et située radialement en regard d'une portion de retenue complémentaire 24 prévue sur le carter 10. Plus précisément, cette portion 24 comporte une piste de roulement complémentaire 26, également annulaire et centrée sur l'axe 2. En configuration normale de vol telle que schématisée sur la figure 1, la piste 26 se trouve donc située autour et à distance de la piste 22, de sorte qu'elles ne coopèrent pas l'une avec l'autre. Ainsi, les moyens de retenue constitués par les deux portions 20, 24 restent inactifs, car les pistes de roulement 22, 26 sont à distance radiale l'une de l'autre en formant un jeu annulaire 34 sensiblement constant sur tout le pourtour de celles-ci.

Dans cette configuration normale, les liaisons mécaniques fusibles 16a, 16b sont suffisamment résistantes pour supporter les efforts radiaux transmis par les paliers avant 12a, 12b, servant à maintenir la rotation de l'arbre 8 selon l'axe longitudinal 2 du turboréacteur.

Un cas de problème exceptionnel conduisant à la perte d'une ou plusieurs aubes de soufflante 6, le rotor 4 subit un balourd qui provoque des efforts radiaux extrêmement élevés dans les structures du turboréacteur, et en particulier dans les supports de palier 14a, 14b et 14c.

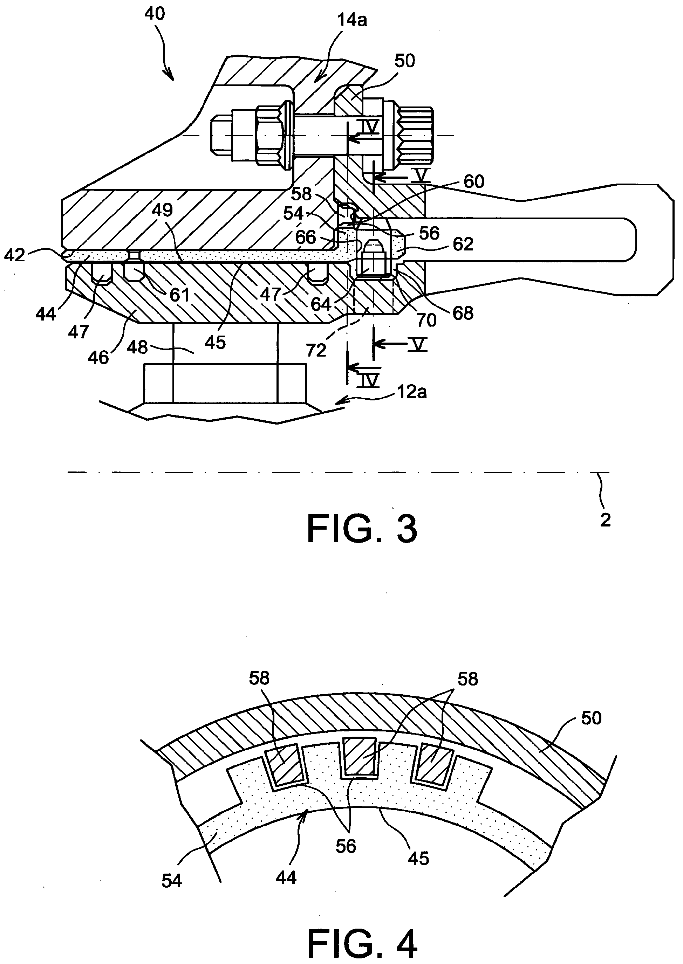

Comme cela a été évoqué précédemment, les deux liaisons mécaniques fusibles 16a, 16b sont prévues pour rompre lorsque les supports 14a, 14b sont soumis à ces efforts radiaux extrêmement élevés, de grandeur prédéterminable. En référence à la figure 2, la conséquence quasi-immédiate de ces ruptures réside dans le débattement radial de l'arbre 8 portant le rotor 4 subissant le balourd, ce débattement conduisant la piste de roulement 22 à se déplacer également radialement avec le support 14b, jusqu'à venir au contact de la piste de roulement complémentaire 26 après consommation du jeu radial 34. Un contact ponctuel 36 est alors établi entre les deux pistes de roulement 22, 26 initialement écartées l'une de l'autre, comme cela est schématisé sur la figure 4.

Une fois le contact établi, le débattement radial de l'arbre 8 est stoppé. Cet arbre subit alors, de façon connue de l'homme du métier, un mouvement de précession durant lequel il continue à tourner sur lui-même, et tourne également autour de l'axe longitudinal 2 duquel il reste décalé angulairement. A cet égard, il est précisé que le palier arrière 12c continue à guider et centrer ponctuellement cet arbre 8 sur l'axe 2.

Le mouvement de précession de l'arbre 8 et de son rotor 4, combiné au contact des portions de retenue 20, 24, conduit la portion de retenue 20 à être animée d'un mouvement relatif par rapport à la portion de retenue complémentaire 24.

Ce mouvement relatif est un roulement, habituellement sans glissement du fait des efforts de contact très élevés, de la piste 22 sur la piste fixe 26 de diamètre supérieur.

La conception telle que décrite ci-dessus est prévue pour assurer un découplage mécanique aussi rapide que possible. Ainsi, il est par exemple fait en sorte qu'une durée de l'ordre de la milliseconde ne soit pas excédée entre l'instant de la perte de l'aube de soufflante 6, et l'instant de la rupture des liaisons mécaniques fusibles 16a, 16b.

L'invention vise plus particulièrement à limiter les risques d'endommagement du turboréacteur avant le découplage mécanique, comme cela va à présent être détaillé. En effet, pendant le temps de découplage, les bagues extérieures des deux paliers de roulement avant, en particulier celle du palier 12a le plus proche de la soufflante, sont soumises à des charges radiales très élevées.

En référence à présent aux figures 3 à 6, on voit une structure 40 du turboréacteur dont le coeur est constitué par le palier avant 12a. Cette structure 40 comporte également le support de palier annulaire 14a, définissant un alésage 42 centré sur l'axe 2. Cet alésage loge de manière serrée une frette 44 en forme de manchon ou de bague métallique centrée sur l'axe 2, qui définit elle-même un alésage 45 dans lequel est logée la bague extérieure 46 du palier 12a. La frette 44 est donc interposée radialement entre l'alésage 42 du support 14a et la bague 46, qui, intérieurement, supporte les rouleaux 48 du palier.

La bague extérieure 46 porte deux joints ou segments métalliques annulaires 47 espacés axialement l'un de l'autre, et établissant chacun une liaison étanche avec l'alésage 45 défini par la frette 44. Entre ces joints 47, de préférence réalisés en fonte, il est prévu un jeu annulaire entre la surface extérieure de la bague 46 et l'alésage 45, ce jeu étant rempli d'huile afin de former un film d'huile annulaire 49 constituant un système d'amortissement. Ce système, également dénommé « Squeeze Film », permet en effet d'amortir les vibrations de la bague 46, essentiellement dans la direction radiale. A titre indicatif, l'alimentation en huile s'effectue classiquement par le port 61 montré sur la figure 3.

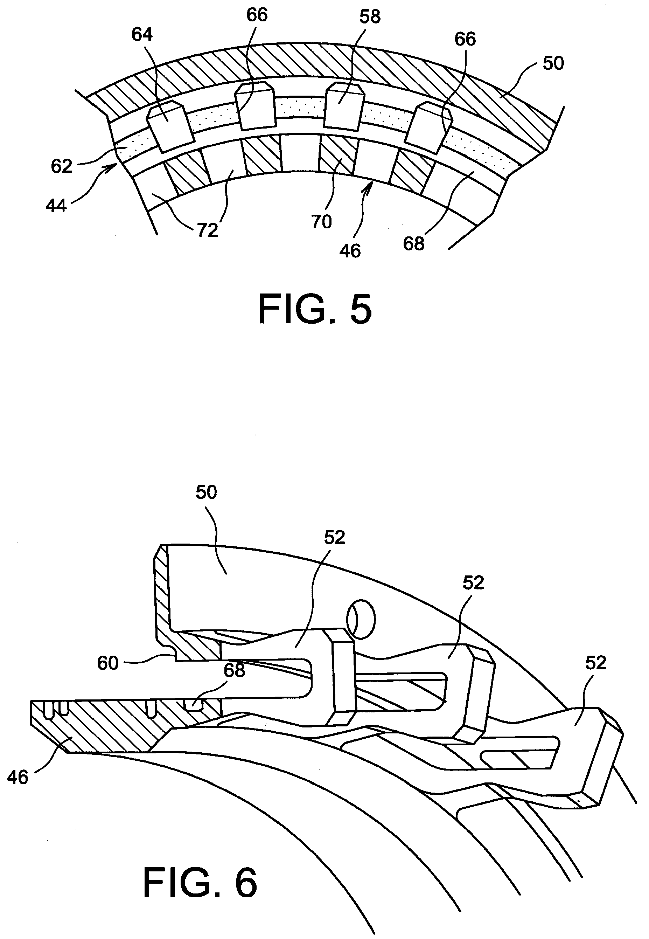

Des moyens de raccordement sont prévus entre la bague 46 et le support 14a. Ces moyens comprennent tout d'abord une bride de fixation 50 centrée sur l'axe 2, et montée de façon boulonnée sur un flanc aval du support 14a. Cette bride 50 se trouve alors agencée radialement en regard et à distance de l'extrémité arrière de la bague extérieure 46. Pour leur raccordement, il est prévu des moyens souples, par exemple prenant la forme d'une pluralité de broches 52 espacées circonférentiellement les unes des autres, comme cela est montré sur les figures 3 et 6. Chacune de ces broches 52, par exemple en forme de U et agencée dans un plan radial, présente deux branches latérales reliées par une base au niveau de leur extrémité arrière, et dont les deux extrémités avant sont respectivement fixées sur la bride 50 et sur l'extrémité arrière de la bague 46, de préférence par soudage. Ces broches 52 permettent des débattements radiaux de la bague 46 dans l'alésage 45, assurant l'amortissement du palier 12a par le film d'huile 49.

A son extrémité arrière, la frette 44 est pourvue d'une collerette 54 s'étendant radialement vers l'extérieur et définissant des encoches 56 espacées circonférentiellement les unes des autres. Ces encoches 56, ouvertes radialement vers l'extérieur, logent chacune un ergot 58 faisant saillie axialement vers l'arrière depuis le flanc aval du support de palier 14a, auquel ces ergots 58 sont solidarisés. La liaison mécanique conférée par la coopération entre les encoches 56 et les ergots 58, telle que montrée sur la figure 4, interdit / limite la rotation selon l'axe 2 de la frette 44 dans l'alésage 42 du support 14a.

La figure 3 montre que la collerette dentée 54 est logée axialement entre le flanc aval du support 14a, et une surface annulaire de butée axiale 60 pratiquée sur la bride 50, à l'aide d'un épaulement. Cet enserrement axial de la collerette 54, réalisé avec ou sans jeu, permet de retenir axialement la collerette par rapport au support 14a et à la bride 50, dans les deux sens de la direction axiale. La collerette 54 forme donc des premiers moyens de butée solidaires de la frette, capables, en particulier, de retenir axialement cette frette 44 par rapport au support de palier 14a, en cas de rupture des broches 52.

La frette 44 comporte également une extension arrière annulaire 62 équipée de pions 64 espacés circonférentiellement les uns des autres. Comme cela est visible sur les figures 3 et 5, chaque pion 64 est logé dans un orifice de logement 66 pratiqué sur la l'extension 62. Le montage s'effectue de toute manière réputée appropriée pour l'homme du métier, par exemple à force ou par vissage.

Chaque pion 64 est orienté sensiblement radialement, avec son extrémité radialement interne logée dans une gorge 68 pratiquée sur l'extrémité arrière de la bague 46, en étant ouverte radialement vers l'extérieur. Comme cela est le mieux visible sur la figure 5, il est noté que l'extrémité radialement interne de chaque pion 64 se situe en regard radialement d'une partie pleine 70 du fond de gorge. Ce fond de gorge n'est en effet pas plein sur tout son pourtour annulaire, puisque la partie pleine est interrompue par la présence d'une pluralité de trous de passage radiaux 72 traversant la bague 46. Ces trous 72, espacés circonférentiellement les uns des autres et débouchant donc chacun dans le fond de la gorge, entre deux portions de la partie pleine 70, permettent le montage des pions 64, comme cela sera explicité ci-après.

En outre, l'extrémité radialement externe de chaque pion 64 se trouve en regard radialement de la bride de fixation 50. Ainsi, les pions 64 disposés régulièrement autour de l'axe 5 sont emprisonnés dans les deux sens de la direction radiale, ce qui empêche leur perte en cas de rupture accidentelle de leur liaison avec l'extension annulaire 62.

Les pions 64, enserrés avec ou sans jeu entre les deux flancs latéraux de la gorge 68 centrée sur l'axe 2, permettent de retenir axialement l'extension annulaire de frette 62 par rapport à la bague extérieure de palier 46, dans les deux sens de la direction axiale. Ces pions 64 forment donc des seconds moyens de butée solidaires de la frette, capables, en particulier, de retenir axialement la bague extérieure de palier 46 par rapport à cette frette 44, en cas de rupture des broches 52.

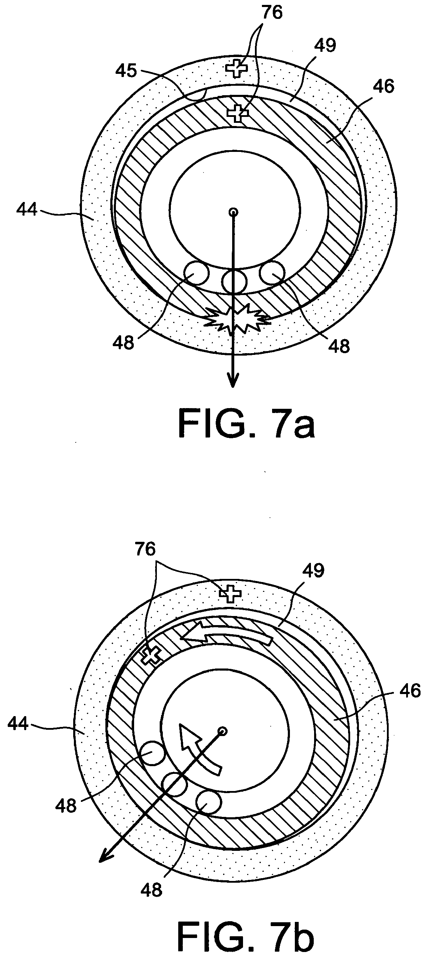

Les figures 7a et 7b montrent schématiquement le mouvement de la bague extérieure de palier 46 avant le découplage mécanique des paliers, et après la perte d'aube de soufflante, pendant le temps de découplage. Sur ces figures, il est montré que durant le roulement de la bague extérieure 46 sur l'alésage de frette 45, il se crée simultanément un déplacement relatif tangentiel / circonférentiel entre ces deux éléments, comme en témoigne l'évolution des positions relatives entre les deux croix 76, symbolisant respectivement deux points quelconques de la frette et de la bague. Ce déplacement relatif tangentiel / circonférentiel engendre une mise en contrainte circonférentielle des broches souples de raccordement 52, qui peuvent donc être endommagées, jusqu'à éventuellement subir une rupture.

Lors d'une telle rupture accidentelle des broches souples 52, la bague extérieure 46 du palier avant n'est plus retenue axialement par ces broches endommagées, mais le relais est pris par les premiers et seconds moyens de butée précités, capables, en combinaison, d'assurer la rétention axiale de la bague 46 et de l'ensemble du palier 12a, par rapport au support de palier 14a.

A titre indicatif, il est noté que l'endroit d'une telle rupture des broches 52 peut être prédéterminé, par exemple au niveau d'une portion de section réduite. Cet endroit est choisi de sorte qu'après la rupture, les pions 64 continuent à être emprisonnés radialement par l'extrémité arrière de la bague 46, et par la bride de fixation 50.

Grâce à cette rétention axiale de secours, la bague extérieure 46 peut continuer à rouler sur l'alésage de frette 45 jusqu'à l'instant du découplage mécanique des paliers, à partir duquel cette bague 46 n'est plus sollicitée radialement, et ne risque plus d'être endommagée. En effet, après le découplage mécanique des paliers, les efforts radiaux transitent essentiellement par le palier intermédiaire 12b, comme cela a été décrit ci-dessus en référence à la figure 2.

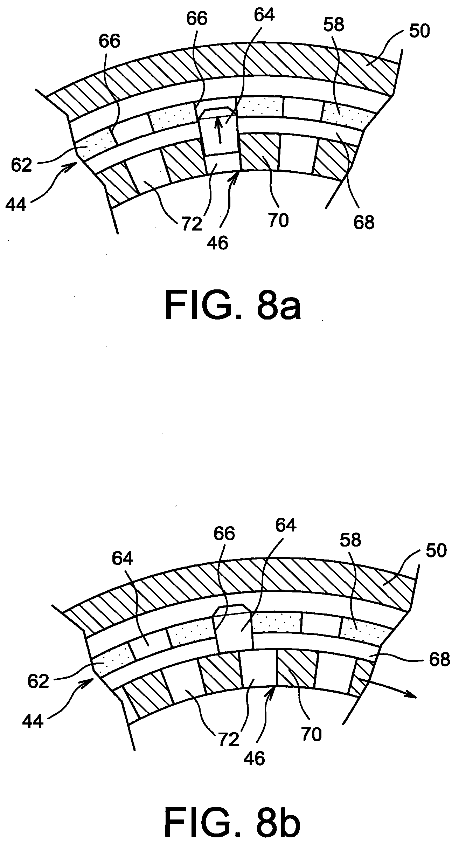

Les figures 8a et 8b schématisent un procédé de montage de la structure 40 montrée sur les figures 3 à 7b.

Tout d'abord, la frette 44 est montée serrée dans l'alésage 42 du support 14a. La position angulaire relative entre les deux éléments est choisie de sorte qu'en fin de montage, les ergots 58 se retrouvent logés dans les encoches 56 de la collerette de frette 54.

Ensuite, il est réalisé l'insertion de la bague extérieure de palier 46 dans l'alésage de frette 45, par déplacement relatif axial entre ces deux éléments. Cette insertion est réalisée de manière à aligner radialement chacun des trous de passage 72 pratiqués dans la bague 46 avec un orifice de logement de pion 66 pratiqué dans la frette, comme cela a été schématisé sur la figure 8a. Sur cette même figure, il est représenté l'étape suivante consistant à insérer les pions 64 dans les orifices de logement de pion 66, en passant par les trous de passage 72. Chaque pion 64 traverse donc radialement vers l'extérieur un trou 72, jusqu'à ce qu'il soit maintenu dans son orifice de logement associé 66. Dans sa position finale, le pion 64 a son extrémité radialement interne logée dans la gorge 68 de la bague extérieure, et est complètement extrait du trou 72 qu'il a traversé.

Ensuite, comme cela a été schématisé sur la figure 8b, il est précédé à la rotation de la bague extérieure 46 de manière à ce que chaque pion 64 se situe en regard radialement de la partie pleine 70 du fond de la gorge. Ainsi, au lieu d'être en regard radialement des trous de passage 72, les pions 64 se retrouvent en regard de la partie pleine 70 formant butée radiale vers l'intérieur. La rotation de la bague 46 s'apparente donc à une opération de verrouillage des pions 64.

Enfin, il est procédé au montage de la bride de fixation 50 sur le support de palier 14a, par boulonnage.

Il est précisé que le montage est réalisé de sorte que chaque pion 64 se trouve localisé, selon la direction tangentielle / circonférentielle, entre deux broches 52. Cela permet d'assurer un meilleur contrôle de présence de ces pions, par exemple à l'aide d'une cale à insérer axialement entre la bride 50 et la bague 46, depuis un espace tangentiel délimité entre deux broches 52, facilement accessible pour l'opérateur.

Bien entendu, diverses modifications peuvent être apportées par l'homme du métier à l'invention qui vient d'être décrite, uniquement à titre d'exemples non limitatifs.

## Revendications

1. Structure (40) pour turboréacteur d'aéronef comprenant :
- un palier de roulement (12a) comprenant une bague extérieure (46) ;
- un support de palier (14a) entourant ladite bague extérieure ;
- une frette (44) interposée entre la bague extérieure de palier et le support de palier ;
- des moyens de raccordement de la bague extérieure sur le support de palier, ces moyens comprenant :
- une bride de fixation (50) montée sur le support de palier ; .et
- des moyens souples de raccordement (52) fixés d'une part à la bague extérieure de palier, et d'autre part à la bride de fixation ;
ladite structure comprenant en outre des moyens permettant la rétention axiale de la bague extérieure de palier, en cas de rupture desdits moyens souple de raccordement,
**caractérisée en ce que**
lesdits moyens permettant la rétention axiale de la bague extérieure comprennent :
- des premiers moyens de butée (54) solidaires de la frette (44) et capables de retenir axialement cette frette par rapport au support de palier (14a) en cas de rupture desdits moyens souple de raccordement (52) ; et
- des seconds moyens de butée (64) solidaires de la frette (44) et capables de retenir axialement la bague extérieure (46) par rapport à cette frette, en cas de rupture desdits moyens souple de raccordement,
lesdits seconds moyens de butée prenant la forme d'une pluralité de pions (64) espacés circonférentiellement les uns des autres et chacun logé dans un orifice de logement de pion (66) pratiqué dans ladite frette (44), lesdits pions (64) présentant une extrémité radialement interne se situant dans une gorge (68) pratiquée sur ladite bague extérieure de palier (46) équipée d'une pluralité de trous de passage radiaux traversants (72), débouchant dans le fond de ladite gorge (68), avec lesdits pions (64) se situant chacun en regard radialement d'une partie pleine (70) du fond de ladite gorge.

2. Structure selon la revendication 1, **caractérisée en ce que** lesdits pions (64) se situent chacun en regard radialement de la bride de fixation (50).

3. Structure selon la revendication 1 ou la revendication 2, **caractérisée en ce que** lesdits moyens souples de raccordement prennent la forme d'une pluralité de broches (52) espacées circonférentiellement les unes des autres, chacune présentant une forme de U agencé dans un plan radial.

4. Structure selon l'une quelconque des revendications précédentes, **caractérisée en ce que** lesdits premiers moyens de butée prennent la forme d'une collerette (54) agencée axialement entre le support de palier (14a) et ladite bride de fixation (50).

5. Structure selon la revendication 4, **caractérisée en ce que** ladite collerette (54) est pourvue d'encoches (56) espacées circonférentiellement les unes des autres, et coopérant avec des ergots (58) solidaires dudit support de palier (14a) afin de limiter/interdire la rotation de la frette par rapport audit support de palier.

6. Procédé de montage d'une structure (40) pour turboréacteur d'aéronef selon l'une quelconque des revendications précédentes, comprenant les étapes suivantes :
- insertion de la bague extérieure de palier (46) dans la frette, de manière à aligner radialement chacun des trous de passage (72) pratiqués dans la bague avec un orifice de logement de pion (66) pratiqué dans la frette (44) ;
- insertion des pions (64) dans les orifices de logement de pion (66), par les orifices de passage (72), de manière à placer l'extrémité radialement interne de chaque pion (64) dans la gorge (68) de ladite bague extérieure ;
- rotation de la bague extérieure de palier (46) de manière à ce que chaque pion (64) se situe en regard radialement de la partie pleine (70) du fond de ladite gorge ; et
- montage de la bride de fixation (50) sur le support de palier (14a).

7. Turboréacteur (1) d'aéronef comprenant une structure (40) selon l'une quelconque des revendications 1 à 5.

## Patentansprüche

1. Aufbau (40) für Flugzeug-Turbinenstrahltriebwerke, welcher umfasst:
- ein Wälzlager (12a) mit einem Außenring (46);
- eine Lagerstütze (14a), die diesen Außenring umgibt;
- ein Armierungsband (44), das zwischen dem Lageraußenring und der Lagerstütze angeordnet ist;
- Verbindungsmittel für den Lageraußenring an der Lagerstütze, wobei diese Verbindungsmittel umfassen:
- einen Befestigungsflansch (50), der an der Lagerstütze angebracht ist, und
- elastische Verbindungsmittel (52), die einerseits an dem Lageraußenring und andererseits an dem Befestigungsflansch befestigt sind;
wobei der genannte Aufbau ferner Mittel aufweist, die den axialen Halt des Lageraußenrings im Falle eines Brechens der genannten elastischen Verbindungsmittel gewährleisten,
**dadurch gekennzeichnet,**
**dass** die genannten Mittel, die den axialen Halt des Lageraußenrings gewährleisten, umfassen:
- erste Anschlagmittel (54), die mit dem Armierungsband (44) fest verbunden sind und geeignet sind, im Falle eines Brechens der genannten elastischen Verbindungsmittel (52) dieses Armierungsband gegenüber der Lagerstütze (14a) zu halten, sowie
- zweite Anschlagmittel (64), die mit dem Armierungsband (44) fest verbunden sind und geeignet sind, im Falle eines Brechens der genannten elastischen Verbindungsmittel den Lageraußenring (46) gegenüber diesem Armierungsband zu halten,
wobei die genannten zweiten Anschlagmittel in Form einer Mehrzahl von Stiften (64) vorgesehen sind, die auf einer Außenumfangslinie voneinander beabstandet angeordnet sind und jeweils in einer in dem genannten Armierungsband (44) ausgeführten Stiftaufnahmeöffnung (66) Aufnahme finden, wobei diese Stifte (64) ein radial inneres Ende aufweisen, das sich in einer Nut (68) befindet, welche an dem Lageraußenring (46) ausgeführt ist, der mit einer Mehrzahl von radial verlaufenden, durchgehenden Durchgangslöchern (72) versehen ist, die in den Boden der genannten Nut (68) münden, wobei sich die Stifte (64) jeweils radial gegenüber einem massiven Teil (70) des Bodens dieser Nut befinden.

2. Aufbau nach Anspruch 1,
**dadurch gekennzeichnet,**
**dass** sich die Stifte (64) jeweils radial gegenüber dem Befestigungsflansch (50) befinden.

3. Aufbau nach Anspruch 1 oder Anspruch 2,
**dadurch gekennzeichnet,**
**dass** die genannten elastischen Verbindungsmittel in Form einer Mehrzahl von Verbindungsstiften (52) vorgesehen sind, die auf der Außenumfangslinie voneinander beabstandet angeordnet sind, wobei jedes eine U-Form aufweist und in einer radialen Ebene angeordnet ist.

4. Aufbau nach einem der vorherigen Ansprüche,
**dadurch gekennzeichnet,**
**dass** die genannten ersten Anschlagmittel in der Form eines Kragens (54) vorgesehen sind, der axial zwischen der Lagerstütze (14a) und dem Befestigungsflansch (50) angebracht ist.

5. Aufbau nach Anspruch 4,
**dadurch gekennzeichnet,**
**dass** dieser Kragen (54) mit Aussparungen (56) versehen ist, die auf der Außenumfangslinie voneinander beabstandet angeordnet sind und mit Zapfen (58) zusammenwirken, welche mit der Lagerstütze (14a) fest verbunden sind, um das Drehen des Armierungsbandes gegenüber dieser Lagerstütze einzuschränken / zu verhindern.

6. Verfahren der Montage eines Aufbaus (40) für Flugzeug-Turbinenstrahltriebwerke nach einem der vorherigen Ansprüche, welches die folgenden Verfahrensschritte umfasst:
- Einsetzen des Lageraußenrings (46) in das Armierungsband dergestalt, dass jedes der in dem Ring ausgeführten Durchgangslöcher (72) radial auf eine in dem Armierungsband (44) ausgeführte Stiftaufnahmeöffnung (66) ausgerichtet ist;
- Einsetzen der Stifte (64) durch die Durchgangslöcher (72) hindurch in die Stiftaufnahmeöffnungen (66) dergestalt, dass das radial innere Ende jedes Stifts (64) in der Nut (68) dieses Lageraußenrings angeordnet wird;
- Drehen des Lageraußenrings (46) dergestalt, dass jeder Stift (64) in eine dem massiven Teil (70) des Bodens dieser Nut radial gegenüberliegende Position gelangt; und
- Anbringen des Befestigungsflanschs (50) an der Lagerstütze (14a).

7. Flugzeug-Turbinenstrahltriebwerk (1) mit einem Aufbau (40) nach einem der Ansprüche 1 bis 5.

## Claims

1. A structure (40) for an aircraft turbojet including:
- a rolling bearing (12a) including an outer ring (46);
- a bearing bracket (14a) surrounding said outer ring;
- a retaining (44) ring interposed between the outer bearing ring and the bearing bracket;
- means of connecting the outer ring to the bearing bracket, where these means include:
- an attaching flange (50) installed on the bearing bracket; and
- flexible means of connection (52) attached firstly to the outer bearing ring, and secondly to the attaching flange;
where said structure also includes means allowing axial retention of the outer bearing ring, if said flexible connection means fracture,
**characterised in that**
said means enabling axial retention of the outer ring include:
- first stop means (54) securely attached to the retaining ring (44), and capable of axially retaining this retaining ring relative to the bearing bracket (14a) in the event that said flexible connection means (52) fracture; and
- second stop means (64) securely attached to the retaining ring (44), and capable of axially retaining the outer ring (46) relative to this retaining ring, in the event that said flexible connection means fracture,
where said second stop means take the form of multiple slugs (64) spaced circumferentially relative to one another, where each one is held in a slug insertion opening (66) made in said retaining ring (44), where said slugs (64) have a radially internal end which is located in a groove (68) made on said outer bearing ring (46) fitted with multiple radial clearance through-holes (72), emerging in the base of said groove (68), where each of said slugs (64) is positioned radially opposite a full portion (70) of the base of said groove.

2. A structure according to claim 1, **characterised in that** each of said slugs (64) is located radially opposite the attaching flange (50).

3. A structure according to claim 1 or claim 2, **characterised in that** said flexible connection means take the form of multiple spindles (52) spaced circumferentially relative to one another, where each one is U-shaped, and positioned in a radial plane.

4. A structure according to any one of the previous claims, **characterised in that** said first stop means take the form of a skirt (54) positioned axially between the bearing bracket (14a) and said attaching flange (50).

5. A structure according to claim 4, **characterised in that** said skirt (54) has notches (56) spaced circumferentially relative to one another, and cooperating with catches (58) which are securely attached to said bearing bracket (14a), in order to limit/prevent rotation of the retaining ring relative to said bearing bracket.

6. A method of installing a structure (40) for an aircraft turbojet according to any of the previous claims, including the following steps:
- insertion of the outer bearing ring (46) in the retaining ring, so as to align radially each of the clearance holes (72) made in the ring with a slug insertion opening (66) made in the retaining ring (44);
- insertion of the slugs (64) in the slug insertion openings (66), through the through-holes (72), so as to place the radially internal end of each slug (64) in the groove (68) of said outer ring;
- rotation of the outer bearing ring (46) such that each slug (64) is located radially opposite the full portion (70) of the base of said groove; and
- installation of the attaching flange (50) on the bearing bracket (14a).

7. An aircraft turbojet (1) including a structure (40) according to any one of the claims 1 to 5.
